Europäisches Patentamt

European Patent Office

Office européen des brevets

(11) Veröffentlichungsnummer: **0 234 183**
**B1**

(12) **EUROPÄISCHE PATENTSCHRIFT**

(45) Veröffentlichungstag der Patentschrift: **14.03.90**

(51) Int. Cl.⁵: **F 16 B 13/14**

(21) Anmeldenummer: **87100014.7**

(22) Anmeldetag: **02.01.87**

(54) **Speizdübel aus Kunststoff.**

(30) Priorität: **22.01.86 CH 231/86**

(43) Veröffentlichungstag der Anmeldung:
**02.09.87 Patentblatt 87/36**

(45) Bekanntmachung des Hinweises auf die
Patenterteilung:
**14.03.90 Patentblatt 90/11**

(84) Benannte Vertragsstaaten:
**CH DE FR LI NL**

(56) Entgegenhaltungen:
**EP-A-1 318 704**
**DE-A-1 575 296**
**DE-A-3 242 220**
**DE-A-3 246 688**
**DE-A-3 248 141**
**DK-C- 111 509**
**FR-A-2 163 312**
**GB-A- 406 083**
**GB-A- 854 417**
**GB-A- 908 912**

(73) Patentinhaber: **Egli, Fischer & Co. AG**
**Gotthardstrasse 6 Claridenhof**
**CH-8002 Zürich (CH)**

(72) Erfinder: **Schenkel, Willy**
**Hirschgartnerweg 34**
**CH-8057 Zürich (CH)**

(74) Vertreter: **Patentanwälte Schaad, Balass &**
**Partner**
**Dufourstrasse 101 Postfach**
**CH-8034 Zürich (CH)**

Courier Press, Leamington Spa, England.

**Beschreibung**

Die vorliegende Erfindung betrifft einen Spreizdübel aus Kunststoff gemäss dem Oberbegriff des Patentanspruches 1.

Ganz allgemein sind zwei unterschiedliche Entwicklungstendenzen bei Spreizdübeln aus Kunststoff zu erkennen. Bei der einen Entwicklungstendenz weist die Aussenfläche der Dübelhülse eine sehr ausgeprägte Profilierung mit Umfangsrippen und/oder mit einer Aussenverzahnung auf. Der dieser Entwicklungstendenz zugrunde gelegte Gedanke besteht darin, dass, wenn ein solcher Dübel in ein Bohrloch eingeführt und durch das Einschrauben der Schraube gespreizt wird, die Rippen bzw. die Zähne an der Aussenfläche der Dübelhülse entweder in die Wandung des Bohrloches eindringen, d.h. sich verkrallen, wenn dieses in weiches Material eingetrieben wurde, oder aber sich fliessend defomieren und sich in die Lücken zwischen den Rippen bzw. Zähnen verlagern, wenn das Bohrloch in härteres Material eingetrieben wurde. In weichem Material soll mit solchen Dübeln an örtlich begrenzten Stellen sozusagen ein in Richtung der Dübelachse wirksamer Formschluss erzielt werden, der aber — wie Versuche zeigen — mit einer vergleichsweise bescheidenen Auszugskraft überwindbar ist. In härterem Material dagegen wird an örtlich begrenzten Stellen ein erhöter Reibschluss erreicht, der ebenfalls mit einer vergleichsweise bescheidenen Auszugskraft überwindbar ist. Beispiele von bekannten Dübeln mit einer ausgeprägten Profilierung der Aussenwand der Dübelhülse finden sich in der DE—A—2 840 087, in der DE—C—2 430 217, in der DE—C—3 208 347, in der DE—A—3 238 859, DE—U—83 21 395.3 oder in der EP—A—0 064 768 beschrieben.

Die andere Entwicklungstendenz beruht auf der Erkenntnis, dass die Verankerung des Dübels durch das Anpressen der Aussenfläche der Dübelhülse an die Wandung der Bohrung zustandekommt, und dass die Verankerung umso besser wird, je grösser der hierzu zur Verfügung stehende Teil der Aussenfläche der Dübelhülse ist. Solche Dübel weisen die im Oberbegriff des Patentanspruches 1 angegebenen Merkmale auf. Die Dübelhülse hat, abgesehen von etwaigen Umfangsrillen geringerer Tiefe, eine im wesentlichen zylindrische, glatte Aussenfläche. Bekannte Dübel dieser Art finden sich beispeilsweise in den DE—A—3 246 688, 3 248 141, 3 308 755, 3 242 220, 1 575 296, oder den GB-PSen 406 083, 854 417 und 908 912 und in der DK—C—111509 beschrieben.

Bei den bekannten Dübeln dieser Gattung teilen die durchgehenden Schlitze die Dübelhülse in zwei schalenartige Gebilde, die beim Einführen des Spreizelementes, nämlich der Schraube, einfach diametral auseinandergetrieben werden. Dabei entsteht ein erhöter Kraftschluss zwischen der Wandung des Bohrloches und lediglich zwei einander diametral gegenüberliegenden Bereichen der Aussenfläche der Dübelhülse, während zwischen der Wandung des Bohrloches und den unmittelbar an die Schlitze angrenzenden Bereichen der Aussenfläche der Dübelhülse — wenn überhaupt — nur eine beschiedene Erhöhung der Flächenpressung erfolgt. Die vorbekannten Dübel mit im wesentlichen glasser, zylindrischer Aussenfläche der Dübelhülse vermögen also den vorstehend erwähnten Grundsatz, wonach die Verankerung des Dübels umso besser wird, je grösser der an die Innenwand des Bohrloches angepresste Teile der Aussenfläche der Dübelhülse ist, nur teilweise zu erfüllen.

Ausserdem sind die bekannten Dübel dieser Art lediglich für vergleichsweise kompaktes Mauerwerk geeignet. In einem Mauerwerk, das im wesentlikchen aus Hohlblocksteinen besteht, ist die für die Verankerung des Dübels wirksame Länge oft so gering, dass auch hier nur eine geringe Auszugskraft erforderlich ist, um den Dübel auch in gespreiztem Zustand aus dem Bohrlock herauszuziehen.

Eine blosse Verlängerung herkömmlicher Dübel der erwähnten Art, um sie für Mauerwerk aus Hohlblocksteinen geeigneter zu machen, ist zwar an sich denkbar, doch ist der Spreizbereich auf einen vergleichsweise geringen Längenabschnitt begrenzt.

Bei diesem Stand der Technik ist es als eine Aufgabe der Erfindung anzusehen, einen Dübel der im Obergriff des Patentanspruches 1 genannten Gattung zu schaffen, bei dem der Spreizbereich sich praktisch über die ganze Aussenfläche und über die gesamte Länge der Dübelhülse erstreckt, wenn die Schraube in den Längskanal eingeschraubt wird.

Diese Aufgabe wird beim Dübel mit den Merkmalen des Obergriffs von Anspruch 1 dadurch gelöst, dass er die im Kennzeichen des Patentanspruches 1 aufgeführten Merkmale aufweist.

Dadurch, dass der Längskanal einen kreuzförmigen Querschnitt aufweist, wird die Dübelhülse in ihrem Spreizbereich im Querschnitt vierteilt, wobei jeder dieser vier Teile im Querschnitt im wesentlichen kreissektorförmig ist. Dort, wo von gegenüberliegenden Armen des Kreuzes keine Schlitze ausgehen, sind die beiden kreissektorförmigen Teile durch eine an die Enden der Arme des Kreuzes anschliessende "Schwachstelle" miteinander verbunden, die beim Einschrauben der Schraube wie in Filmscharnier wirkt, wodurch die Teile der Dübelhülse zusätzlich um die durch die "Schwachstelle" gegebene Achse auseinander geschwenkt werden.

Merkmale vorteilhafter Ausführungsformen sind in den abhängigen Ansprüchen definiert.

Nachstehend ist die Erfindung rein beispielsweise anhand der Zeichnung näher beschrieben. Es zeigt:

Fig. 1 eine Seitenansicht eines besonders für Bohrlöcher in Hohlblocksteinen geeigneten Dübels;

Fig. 2 einen Schnitt längs der Linie II—II durch den Dübel gemäss Fig. 1;

Fig. 3 einen Schnitt längs der Linie III—III der Fig. 1;

2

Fig. 4 einen Schnitt längs der Linie IV—IV der Fig. 1;

Fig. 5 einen Schnitt längs der Linie V—V der Fig. 1;

Fig. 6 einen Schnitt längs der Linie VI—VI der Fig. 1;

Fig. 7 und 8 Schnitte längs der Linien VII—VII bzw. VIII—VIII der Fig. 1;

Fig. 9 einen Schnitt längs der Linie IX—IX der Fig. 1; und

Fig. 10 den Dübel der Fig. 1 mit einer vollständig eingeschraubten Schraube, jedoch nicht in einem Bohrloch.

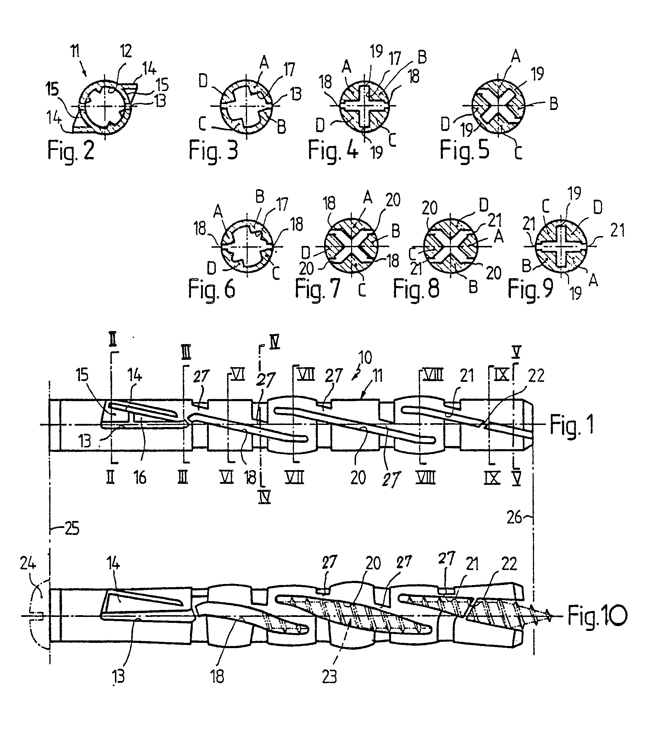

Der in fig. 1 dargestellte Dübel 10 besitzt eine Dübelhülse 11. Die Dübelhülse 11 weist eine im wesentlichen glatte, zylindrische Aussenfläche auf, die durch in der Zeichnung stark überhöht gezeichnete Bünde mit dazwischenliegenden, breiten Umfangsnuten gegliedert ist. In Wirklichkeit ist der Aussendurchmesser der Bünde nur ca. 5% grösser als der Durchmesser am Boden der dazwischenliegenden Umfangsnuten. Eine solche Gliederung der Aussenfläche kann dazu beitragen, beim Eintreiben des Dübels in ein (genau gebohrtes) Borhloch allfällig an der Bohrlochwand noch haftenden Bohrstaub von der Bohrlochwand abzuwischen und in den Umfangsnuten zu sammeln.

Wie der Fig. 2 zu entnehmen ist, weist die Dübelhülse 11, im Anschluss an ihre Eintrittsöffnung noch einen rohrförmigen Querschnitt auf, der einen im wesentlichen zylindrischen Eingangsabschnitt 12 des zur Aufnahme der Schraube bestimmten Kanals bildet. Auf dieser Höhe ist die Dübelhülse 11, durch zwei einander diametral gegenüberliegende, jedoch axial verlaufende Schlitze 13 geteilt. Im Bereich dieser axialen Schlitze 13, und diesen (in Einschraubrichtung, d.h. in Fig. 2 im Uhrzeigersinn gesehen) vorangehend, steht von der Aussenfläche der Dübelhülse 11 ein angeformter Flügel 14 in etwa tangentialer Richtung und in Einschraubrichtung ab. Dieser Flügel 14 hat die Form eines gegen die Dübelspitze hin sich verjüngenden Dreiecks oder Keiles, dessen Wurzellinie schräg zu einer Mantellinie der Dübelhülse verläuft, und dient als Drehsicherung, wenn der Dübel in ein Bohrloch eingetrieben wird, weil seine Aussenkante sich an der Innenwand des Bohrloches verkrallt. Dabei wird aber der Flügel 14 durch das Bohrloch radial nach innen umgeklappt und die an ihm angeformten Lappen 16 dringen in den zunächst noch zylindrischen Abschnitt 12 des Kanals ein und bilden dort eine Einschlagssperre für den Fall, dass der Dübel zusammen mit einer eingesteckten Schraube in das Bohrloch eingeschoben wird. Dabei verzahnen sich die Lappen 16, aber auch die Lappen 15 mit den Gewindegängen der eingesteckten Schraube und verhindern beim Eintreiben des Dübels in das Bohrloch eine weitere Axialverschiebung der Schraube in bezug auf die Dübelhülse 11.

Den Fig. 3 und 6 ist zu entnehmen, dass der zur Aufnahme der Schraube bestimmte Kanal, ausgehend vom zylindrischen Abschnitt 12, allmählich in einen im Querschnitt kreuzförmigen Kanal 17 übergeht. In Fig. 3 ist es das Ende des Schlitzes 13, das von den Ecken zweier gegenüberliegender Arme des den Kanal 17 bildenden Kreuzes ausgeht. Die "Züge" oder Arme des Kanals 17 mit dem Querschnitt eines Kreuzes sind im Sinne einer rechtsgängigen Wendel verdwunden, worauf noch zurückzukommen sein wird. In Fig. 6 dagegen sind die beiden "schlitzfreien" Arme des Kreuzes der Fig. 3 bereits in die gezeigte Stellung verdreht und von diesen geht nun ein weiterer, durchgehender Schlitz 18, der ebenfalls die Form einer rechtsgängigen, etwa 90° des Umfanges der Dübelhülse 11 umspannenden Wendel hat.

Den Fig. 3, 6 und insbesondere der Fig. 4 ist bereits zu entnehmen, dass der Kanal 17 mit dem kreizförmigen Querschnitt das "Fleisch" der Dübelhülse 11 in im Querschnitt etwa kreissektorförmige Viertel A, B, C und D unterteilt, die in Längsrichtung des Dübels gesehen auch die Form einer rechtsgängigen Wendel mit sehr hoher Steigung haben.

In Fig. 4 sind die Viertel A und D sowie die Viertel B und C durch einen der Schlitze 18 voneinander getrennt, während die Viertel A und B sowie C und D durch eine an das Ende des dazwischenliegenden Armes des Kreuzes anschliessende "Schwachstelle" 19 miteinander zusammenhängen. Diese "Schwachstellen" 19 wirken gewissermassen als Filmscharniere, die dafür sorgen, dass beim Spreizen des Dübels, d.h. beim Einschrauben der Schraube die zusammenhängenden Viertel A, B und C, D nicht nur diametral auseinandergetrieben werden, sondern zusätzlich auch auseinander verschwenkt werden.

Betrachtet man die Fig. 1 auf der Höhe der Schnittlinie VII—VII und die zugehörige Fig. 7, so erkennt man, dass die durchgehenden Schlitze 18 in diesem Bereich enden und von einem weiteren Paar durchgehender Schlitze 20 abgelöst werden, die ähnlich geformt sind, wie die Schlitze 18, also die Form einer rechtsgängigen Wendel mit sehr hoher Steigung haben. Ausserdem überlappt (in Längsrichtung gesehen) der Anfangsbereich der Schlitze 20 den Endbereich der Schlitze 18. In diesem Ueberlappungsbereich sind die vier Viertel A, B, C und D des Querschnittes der Dübelhülse, wie der Fig. 7 zu entnehmen ist, echt voneinander getrennt, so dass sie beim Spreizen des Dübels unabhängig voneinander in beschränktem Masse radial auseinandergetrieben und auf der Innenseite zu einem die Schraube zentrierenden Muttergewinde verformt werden. Nach dem Ende der beiden Schlitze 18 folgt (in Längsrichtung gesehen) ein weiterer Abschnitt, in welchem (wie für den Abschnitt auf der Höhe der Schnittlinie VI—VI) nur der mittlere Bereich der beiden Schlitze 20 vorhanden ist, also die Dübelhülse 11 im Querschnitt wiederum in zwei, je ein Paar durch eine "Schwachstelle" zusammenhängende Viertel aufweisende Hälften unterteilt.

Der Endbereich der Schlitze 20 (s. Fig. 1 auf der Höhe der Schnittlinie VIII—VIII) ist wiederum vom Anfangsbereich eines weiteren Paares von Schlitzen 21 überlappt, so dass auch hier die vier Viertel des Querschnittes der Dübelhülse 11 echt voneinander getrennt sind. Für diesen Abschnitt gilt das, was für den Abschnitt auf der Höhe der Schnittlinie VII—VII gesagt wurde, weshalb die Fig. 7 und 8 auch scheinbar identisch sind, mit dem Unterschied, dass der Endbereich der Schlitze 20 gegenüber derem Anfangsbereich um 90° versetzt angeordnet ist.

Auf der Höhe der Schnittlinie IX—IX, also gegen die Spitze des Dübels der Fig. 1 hin sind nur noch die beiden einander diametral gegenüberliegenden Schlitze 21 vorhanden, die überdies von einem kurzen Steg 22 unterbrochen sind, der dafür sorgt, dass der Dübel, falls er beim Eintreiben in ein Bohrloch auf einen axialen Widerstand trifft, nicht vorzeitig veranlasst wird, sich zu spreizen. Zwischen der Schnittlinie IX—IX der Fig. 1 und der eigentlichen Spitze der Dübelhülse 11 verjüngt sich der Querschnitt des Kanals 17 abermals.

Zu erwähnen bleibt, dass bei der leeren Dübelhülse 11 der Fig. 1 jene Bünde, in denen sich Anfangs- und Endbereiche zweier Schlitzpaare einander überlappen, also der Querschnitt der Dübelhülse in vier voneinander getrennte Viertel aufgeteilt ist, leicht nach aussen bombiert sind (in der Fig. 1 überhöht dargestellt), während jene Bünde, in denen nur jeweils der mittlere Bereich eines Schlitzpaares vorhanden ist, rein zylindrisch sind. Ausserdem ist zu beachten, dass die flachen Umfangsnuten zwischen den Bünden auf der in Einschraubrichtung gesehen den Schlitzen 18, 20 und 21 vorangehenden Seite durch Stege 27 unterbrochen bzw. überbrückt sind. Die Aussenfläche dieser Stege fluchtet mit der Aussenfläche der anschliessenden Bünde.

Wenn nun eine Schraube 23 (vgl. Fig. 10) in den dargestellten Dübel eingeschraubt wird, so wird die Schraubspitze, d.h. dort wo der Kern des Schraubgewindes noch konisch ist, sich in den nach innen einspringenden Ecken des Querschnittes der Dübelhülse 11, d.h. dort, wo der Querschnitt des Kanals 17 kreuzförmig ist, ein Muttergewinde einschneiden und dabei das Kunststoffmaterial des Dübels in die Zwischenräume zwischen den Gängen des Schraubgewindes und/oder in die noch freien Zwischenräume des Kanals 17 plastisch verdrängen. Da der Kanal 17 mit dem kreuzförmigen Querschnitt ebenfalls rechtsgängig (wie der Schraube) gewunden ist, allerdings mit erheblich grösserer Steigung, wird die dabei entstehende Reibung die Tendenz haben, die Dübelhülse 11 in Einschraubrichtung vorerst zu verweinden, d.h. eher die Schlitze 18—21 zu verengen. Diese Tendenz, die Dübelhülse in Einschraubrichtung zu verwinden und/oder der Umstand, dass in Längsrichtung der Kanal 17 mit dem kreuzförmigen Querschnitt ebenfalls verwunden ist, gewährleisten mit Sicherheit eine koaxiale Führung der Schraube in der Dübelhülse. Die genannten Stege 27 ihrerseits bilden wirksame Sperrkanten, die verhindern, dass die Dübelhülse 11, wenn diese in Hohlblocksteine eingebracht, mitdreht.

Erst wenn der auf die Schraubspitze folgende Teil der Schraube "zum Zuge" kommt, wo der Kern des Schraubgewindes zylindrisch ist, wird eine Spreizwirkung ausgeübt, da praktisch kein leerer Raum zur Aufnahme von plastisch verdrängtem Material mehr vorhanden ist. Damit wirkt die Schraube 13 als Spreizmittel, wobei die Dübelhülse dort, wo sie nur ein Schlitzpaar aufweist, gespreizt wird und die über die "Schwachstelle" 19 miteinander verbundenen Viertel ausserdem veranlasst werden, zusätzlich auseinander zu schwenken, während dort, wo in der Dübelhülse die End- und Anfangsbereiche zweier Schlitzpaare sich überlappen, jeder Viertel des Dübelquerschnittes für sich radial nach aussen verdrängt wird. Daraus ergibt sich, dass im gesamten Spreizbereich des Dübels die Mantelfläche der Dübelhülse in ihrem gesamten Umfang weitestgehend gleichmässig an die Innenwand des Bohrloches gepresst wird.

Sobald der Schraubkopf 24 der Schraube 23 oder ein mit dieser festgeschraubtes Teil am eintrittseitigen Ende der Dübelhülse 11 ansteht, und die Schraube 23 weiter eingedreht wird, wirkt diese Schraube in axialer Richtung stauchend auf die Dübelhülse, wie wenn die Schraube eine Förderschnecke wäre. Diese axiale Stauchung hat, sofern das Bohrloch überhaupt eine solche Stauchung zulässt, eine weitere Spreizung bzw. Ausdehnung der Dübelhülse 11 zur Folge, die den Anpressdruck der Mantelfläche der Dübelhülse an die Innenwand des Bohrloches noch verstärkt, was besonders dann nützlich ist, wenn die Dübelhülse in Hohlkörper-Mauerwerk eingetrieben wurde. Diese axiale Stauchung ist durch die strickpunktierten Linien 25 und 26, die die Fig. 1 mit der Fig. 10 verbinden, etwas übertrieben dargestellt.

Es wurde festgestellt, dass die zum Herausziehen der beschriebenen Dübel (korrektes Bohrloch und passende Schraube vorausgesetzt) aufzuwendenden Auszugskräfte jene Auszugskräfte — auch bei geringen Einschraubdrehmomenten der Schraube — deutlich übertreffen, die bei bekannten Dübeln bereits im Schlupfbereich, d.h. im Bereich des Versagens der Dübelverbindung liegen. Dies gilt unabhängig davon, ob der Dübel in homogenes Baumaterial (einschliesslich Holz), Hohlkörper-Mauerwerk oder Blähton eingetrieben wurde.

Nachzutragen bleibt, dass zweckmässigerweise die dem offenen Ende der Dübelhülse 11 zugekehrten Kanten der Lappen 16 oder Sperrnocken, welche Kanten beim Umlegen der Flügel 14 im wesentlichen die Einschlagsperre bilden, in bezug aufeinander in axialer Richtung um eine Masse versetzt ausgebildet sind, die der halben Steigung der Schraube 23 entspricht.

## Patentansprüche

1. Spreizdübel aus Kunststoff, mit einer Dübelhülse (11), die eine im wesentlichen zylindrische, glatte Aussenfläche besitzt und einen an einen im wesentlichen zylindrischen Eingangsabschnitt (12) anschliessenden, in Längsrichtungwendelförmig verlaufenden Längskanal (17) zur Aufnahme einer Schraube (23), sowie einander diametral gegenüberliegende, vom Längskanal (17) ausgehende, die Wanddicke durchsetzende und wendelförmig verlaufende Schlitze (18, 20, 21) aufweist, dadurch gekennzeichnet, dass der Längskanal ausgehend vom Eingangsabschnitt (12) einen Querschnitt im wesentlichen in der Form eines Kreuzes aufweist, und dass mehrere Paare von Schlitzen vorgesehen sind, und dass die Schlitze (18, 20, 21) in Längsrichtung gesehen abschnittsweise und wechselweise von einem Paar gegenüberliegender Arme des Kreuzes und von dem anderen Paar der gegenüberliegenden Arme des Kreuzes ausgehen und dass die Endbereiche der Schlitze einander überlappen.

2. Spreizdübel nach Patentanspruch 1, dadurch gekennzeichnet, dass die Abschnitte des Dübels durch an der Aussenseite der Dübelhülse (11) vorhandene, flache Ringnuten voneinander getrennt sind, welche Ringnuten im Bereich des Durchganges der Schlitze (18, 20, 21) durch jeweils einen Steg (27) unterbrochen sind.

3. Spreizdübel nach Patentanspruch 2, dadurch gekennzeichnet, dass der Steg (27) in dem in Einschraubrichtung gesehen, dem Schlitz (18, 20, 21) unmittelbar vorangehenden Bereich angeordnet ist.

4. Spreizdübel nach einem der Patentansprüche 1 bis 3, bei dem an der Dübelhülse (11) im Bereich ihres offenen Eingangsabschnittes (12) ein in Einschraubrichtung tangential abstehender, gegen die Dübelspitze hin sich verjüngender, dreieckiger Flügel (14) angeformt ist, der beim Einschieben des Dübels in ein Bohrloch umlegbar ist, dadurch gekennzeichnet, dass an den Flügeln (14) Lappen (16) angeformt sind, die sich beim Umlegen der Flügel (14) in den Eingangsabschnitt (12) des Kanals (17) hineinerstrecken, um eine Einschlagsperre zu bilden.

**Revendications**

1. Cheville à expansion en matière plastique, comprenant un manchon de cheville (11) qui possède une surface extérieure sensiblement cylindrique et lisse, et un canal longitudinal (17) qui s'étend en hélice dans la direction longitudinale et qui se raccorde à un segment d'entrée sensiblement cylindrique (12) pour recevoir une vis (23), ainsi que des fentes (18, 20, 21) diamétralement opposées l'une à l'autre, qui partent du canal longitudinal (17), qui traversent l'épaisseur de la paroi et qui s'étendent en hélice, caractérisée en ce que le canal longitudinal présente, à partir du segment d'entrée (12), une section transversale présentant sensiblement la forme d'une croix, en ce qu'il est prévu plusieurs paires de fentes, et en ce que, dans les segments successifs, dans le sens de la longueur, les fentes (18, 20, 21) partent alternativement d'une paire de branches opposées de la croix et de l'autre paire de branches opposées de la croix, et en ce que les zones terminales des fentes se recouvrent mutuellement.

2. Cheville à expansion selon la revendication 1, caractérisée en ce que les segments de la cheville sont séparés l'un de l'autre par des gorges annulaires plates, prévues sur la face extérieure du manchon de la cheville (11), lesdites gorges annulaires étant interrompues par un ligament (27) dans la zone de chaque passage d'une fente (18, 20, 21).

3. Cheville à expansion selon la revendication 2, caractérisée en ce que le ligament (27) est disposé dans la région qui précède immédiatement la fente (18, 20, 21) dans le sens du vissage.

4. Cheville à expansion selon une quelcoque des revendications 1 à 3, dans laquelle il est prévu, formée sur le manchon de la cheville, dans la zone de son segment d'entrée ouvert (12), une ailette triangulaire (14) qui fait saillie tangentiellement dans le sens du vissage, et qui se rétrécit vers la pointe de la cheville, cette ailette se rabattant lorsqu'on enfonce la cheville dans un trou, caractérisée en ce que, sur les ailettes (14), sont venues de moulage des languettes (16) qui, lors du rabattement des ailettes (14), font saillie dans le segment d'entrée (12) du canal (17), pour former un arrêt d'enfoncement.

**Claims**

1. A plastic expansion dowel comprising a dowel sleeve (11) having a substantially cylindrical, smooth outer surface and a longitudinal bore (17) connected to a substantially cylindrical initial section (12) and running helically in the longitudinal direction, for taking up a screw (23), together with slots (18, 20, 21) diametrically opposed to one another, extending from the longitudinal bore (17) through the wall and running helically, characterised in that the longitudinal bore extending from the initial section (12) has a cross-section substantially in the shape of a cross, and that several pairs of slots are provided, the slots (18, 20, 21) when viewed in section along the longitudinal direction extending alternately from one pair of opposite arms of the cross and then from the other pair of opposite arms of the cross and the end regions of the slots overlapping one another.

2. An expansion dowel according to claim 1, characterised in that the sections of the dowel are separated from one another by flat annular grooves provided on the outer surface of the dowel sleeve (11), which annular grooves are interrupted by a respective link (27) in the vicinity of the through passage of the slots (18, 20, 21).

3. An expansion dowel according to claim 2, characterised in that the link (27) is positioned, when viewed in the screwing-in direction, directly preceding the slots (18, 20, 21).

4. An expansion dowel according to any of claims 1 to 3, in which a triangular fin (14) is formed on the dowel sleeve (11) in the vicinity of its open initial section (12) so as to protrude tangentially in the screwing-in direction and so as to taper away from the dowel head, the position of which fin can be changed when the dowel is introduced into a borehole, characterised in that flanges (16) are formed on the fin (14) which extend inwardly when the position of the fin (14) is changed on the initial section (12) of the bore (17) in order to form a closure.

EP 0 234 183 B1

Fig. 2  Fig. 3  Fig. 4  Fig. 5

Fig. 6  Fig. 7  Fig. 8  Fig. 9

Fig. 1

Fig. 10